# EUROPEAN PATENT SPECIFICATION

(11) **EP 0 875 328 B1**
(45) Date of publication and mention of the grant of the patent: **06.08.2003**
(21) Application number: 98106809.1
(22) Date of filing: 15.04.1998
(51) Int. Cl.: B23K 1/00, B23K 37/04

(54) **A system for properly aligning parts of a car to be welded together to form a railway or subway car**
System zum Ausrichten von zuzuschweissenden Waggonteilen, um einen Eisenbahnwaggon oder einen U-Bahnwaggon herzustellen
Système de positionnement d'éléments à souder d'une voiture, afin de fabriquer un wagon de train ou de métro

(30) Priority: 24.04.1997 IT TO970354
(43) Date of publication of application: 04.11.1998
(73) Proprietor: Bisiach, Bruno, 10133 Torino (IT)
(72) Inventor: Bisiach, Bruno, 10133 Torino (IT)
(74) Representative: Robba, Pierpaolo

(56) References cited:
- DE-A- 4 437 901
- US-A- 2 763 053
- US-A- 5 267 683
- US-A- 5 548 096

## Description

The present invention refers to a system or apparatus for properly positioning and/or welding railway cars, subway cars and the like.

The manufacturing of cars for railway and subway systems substantially comprises separately preparing the car floor or well, the two side frames (body sides) and the roof, and then manually welding together these four parts, that is by the intervention of single workers to CO₂ weld first the floor to the two body sides, and then the roof to the body sides, after positioning the roof over the sides. This operation is already troublesome when manufacturing railway cars, since the rewelding of the welding spots implies the presence of critical points on the car body sides in the future operating life of the car. The problem is worsened when manufacturing subway cars, since the body sides of these cars are not formed as one-piece parts, but rather comprise a number of sections between which several doors (at least three on each body side) are to be located for passengers entrance and exit. In this case therefore in addition to a proper welding of the sections, these latter are also to be calibrated and properly positioned in respect of each other along the car length.

As herein used the term "properly positioning" means the mutual coupling between the main parts of a car, i.e. the floor, the body sides and the roof, in accordance with the measures requested by the design. Such measures while allowing for coupling and working tolerancies, are preferably to be met through an automatic adjusting and welding procedure.

Moreover, both in railway cars and in those used in subway systems, manual weldings almost always bring about a finished car that is not geometrically exact, since the single parts do not perfectly fit to each other due to their size.

US 5,267,683 discloses an apparatus for assembling a motorcar vehicle body by welding side panels to other vehicle body constituting members such as a floor panel, a roof panel and the like. The apparatus comprises a supporting movable frame, a plurality of adjusting devices carried by the frame and movable along three directions orthogonal to each other, and a plurality of devices for blocking the body sides to the roof, each of said blocking devices being connected to a respective adjusting device.

In any case, in the art there are not known apparatuses for automatically positioning car parts to be welded for manufacturing passenger cars in railway, subway and like systems. At present these operations are manually accomplished by disposing on 4 struts the car that has been manually welded, and checking the car geometry and in case attempting the necessary corrections. It can be easily understood that such manual operation is completely unreliable and might even be dangerous to the final quality of the manufactured cars.

An object of the present invention is to overcome the above drawbacks of the prior art by providing an automatic apparatus allowing to carry out, either alternatively or jointly, the operations for properly positioning and welding large size cars such as those to be employed in railway, subway systems and the like.

A further object of the present invention is to ensure a high quality of the final car that has been subjected to such complex operations of the above mentioned type, where the several parts of the car are joined together while respecting the operation tolerancies and without having critical points due to manual working. To this aim, the apparatus of the present invention allows for a precise measuring of the assembled car before this latter is prepared to the welding, and therefore a correspondingly precise control measurement after the welding has been carried out.

The above objects and advantages of the invention are achieved through the apparatus and method claimed in independent claims 1 and 11. Additional advantageous characteristics are claimed in the dependent claims.

The present invention will be better understood through some preferred embodiments, only disclosed for exemplary and not limiting purposes, with reference to the attached drawings in which:
- Figure 1 is a perspective view of an embodiment of a complete apparatus according to the present invention;
- Figure 2 is a perspective front view of an adjusting device for properly positioning the side-roof parts of the car;
- Figure 3 is a perspective rear view of the adjusting device of Figure 2;
- Figure 4 is a side cross section view of a welding device and of the clamping assembly of the floor-side-roof parts of the car;
- Figure 5 is a front view of a device for locally raising the car floor;
- Figure 6 is a front view of a device for anchoring the floor of the car, adapted to cooperate with the raising device of Figure 5; and
- Figure 7 is a side view of the device for securing the floor-side parts of the car.

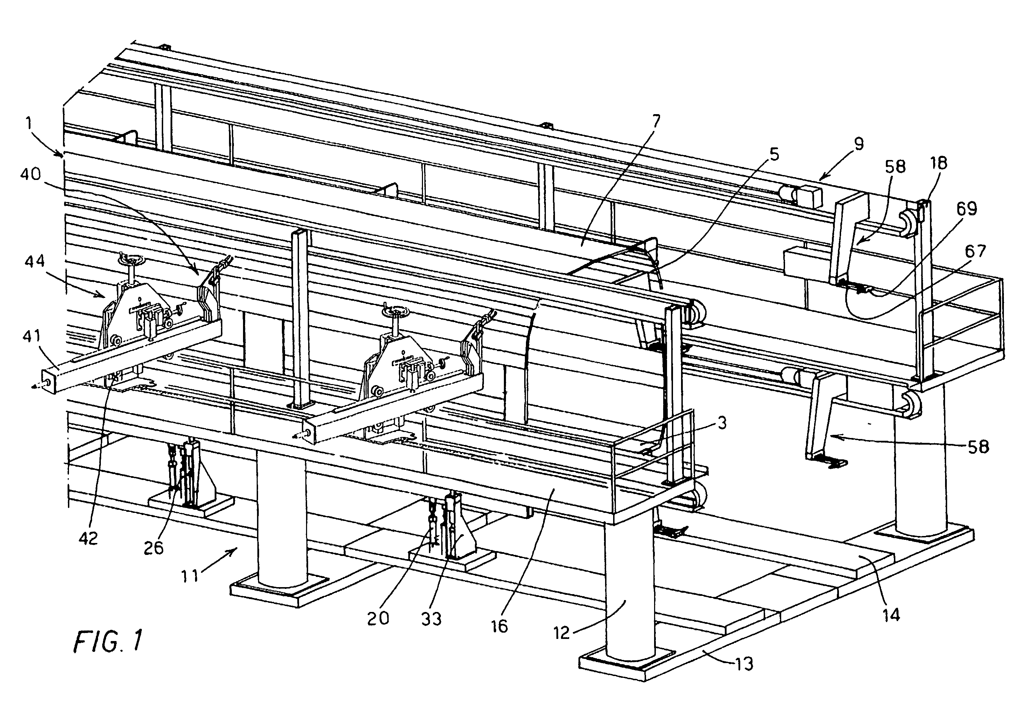

With reference to the drawings, Fig. 1 shows a system or apparatus for properly positioning component parts of a car to be welded together to form a railway or subway car, according to the present invention.

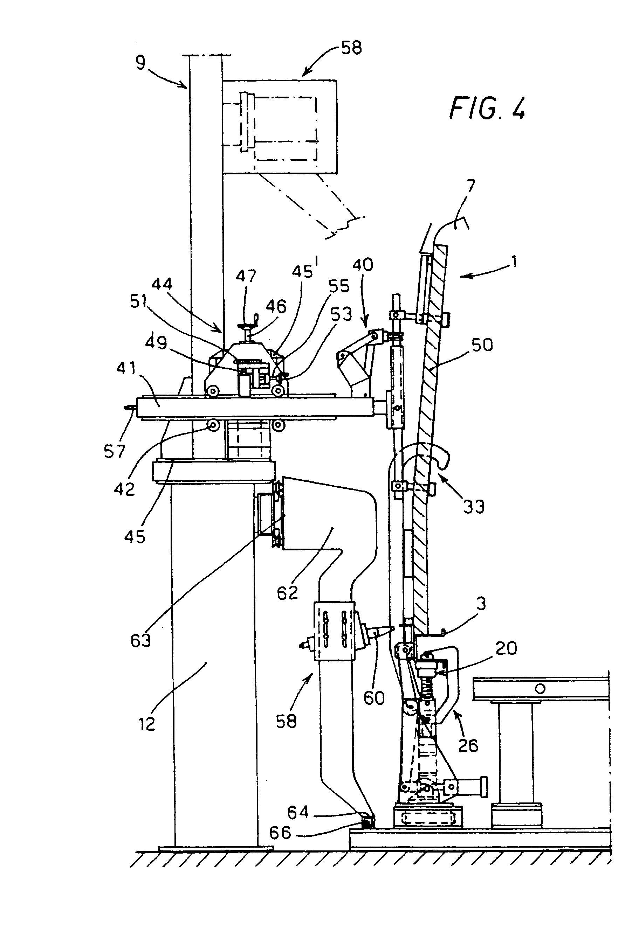

The apparatus has a modular construction, i.e. it can be arranged for automatically carrying out either simultaneously or separately the two operations of positioning and welding the car parts. According to the preferred embodiment, the apparatus is a "complete" apparatus, which allows for manufacturing a complete car 1 (a railway or a subway car), by properly positioning the parts thereof and welding them together. As better shown in Fig. 4, such component parts comprise a floor 3, a plurality of side panels or sides 5 and a roof 7.

The apparatus of the present invention comprises a supporting frame 9 that in the illustrated embodiment is made up by two (side) bridges 11 extending along the whole length of the car to be manufactured (not shown). Each of the bridges 11 is mounted on posts 12, with two facing posts being connected to each other through bed plates 13, and support plates 14 longitudinally extending over the bed plates. Each bridge 11 is further provided with walkways 16 over which operate the personnel controlling the assembling and/or welding operations.

Thanks to the disclosed configuration of the supporting frame 9, the apparatus of the present invention can also be employed for welding the car body from inside. To this aim the frame 9 is further equipped with an upper elongated supporting member (not shown in the drawings, but easy to be devised by the skilled of the art) connected to the upper ends 18 of each of said bridges 11 and extending for the whole length of the car sides. By connecting a longitudinally slidable inner welding device (not shown in the drawings) to such an upper supporting member and introducing the welding device into the car through openings formed in the car roof, completely automated inner welding tasks can be accomplished through the apparatus of the invention.

In order to properly weld together the main component parts forming a railway car or a subway car, at the moment of joining together the sides 5 and the floor 3, this latter must not lie completely flat but has to be sligthly arcuated upward with respect to ground, forming a camber. This is required since after completing the welding of the car, when the car fittings and equipments are fitted inside the coach, the weight of such fittings and equipments will act to return the floor to a flat configuration. The apparatus of the present invention provides for creating in advance an upward floor camber or "deflection" and comprises a plurality of leveling devices 20 adapted to locally raising the floor 3, i.e. each of such devices 20 can raise a portion of the floor. The leveling devices 20 are permanently mounted and properly spaced on both sides of the supporting frame 9, on the bed plates 13 as shown in the embodiment illustrated in Fig. 1. Each leveling device 20 is adapted to adjustably lift the corresponding section of the floor 3 to a height different with respect to the other raising devices 20 in order to achieve the desired deflection.

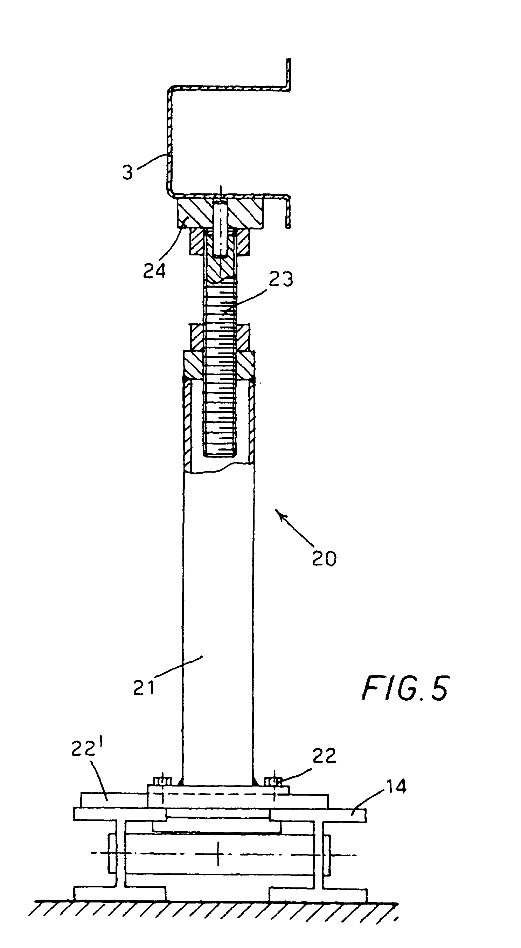

Therefore, as better shown in Fig. 5, each of such leveling or raising devices 20 comprises a vertical hollow column or post 21 fastened to the support plate 14 by fastening means 22 inserted into the post base 22'. An upper piston 23 with a resting head 24 at one end is telescopically movable within the hollow post 21. Piston 23 can be vertically moved upward by a variable length that is usually shorter for the devices 20 located at the car ends and longer for those at the car center. When the device 20 is actuated, the head 24 rests against (a beam of) the floor 3 and the piston 23 pushes the floor upwards.

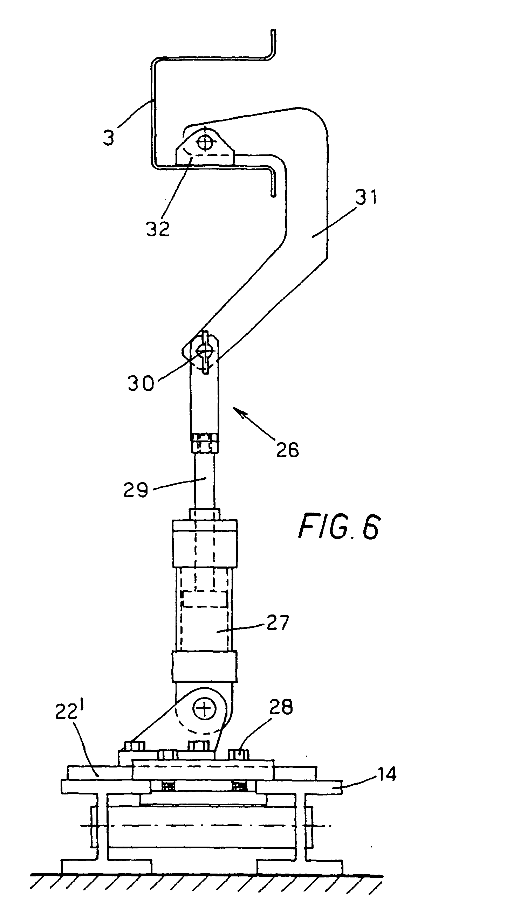

After positioning a number of leveling devices 20 at different heights so as to obtain the deflection requested by the design, use is made of a plurality of anchoring devices 26 that are permanently mounted at both sides of the supporting frame 9, each anchoring device bein adjacent one leveling device. Each anchoring devices 26 is adapted to cooperate with the corresponding adjacent leveling device 20 for anchoring the floor 3 for further operations after a proper camber has been imparted to the floor. To this aim, according to the illustrated preferred embodiment, each anchoring device 26 comprises a hollow cylindrical body 27 an end of which is secured to the support plate 14 by fastening means 28 and a base 22', such body being further provided with a piston 29 movable within such hollow cylindrical body 27 and with an upper end 30 secured to a hook 31 terminating with a flat member 32 for engaging the floor 3. The hook 31 enters the C-shaped section forming the floor 3 (as shown in Figs. 4 and 6) and engages the car floor 3 through the member 32. When the piston 29 is lowered the previously arcuated floor 3 is joined to the supporting frame 9.

The above disclosed devices constitute a portion of the apparatus allowing a beam or floor 3 to be bent and permanently secured in such arcuated profile to the supporting frame 9: this provides for a first mounting reference for properly positioning the car parts. After preparing the car "base" as illustrated, it is necessary to postion and adjust the body sides 5 thereon, this operation being the most difficult and critical when assembling subway cars, as already pointed out.

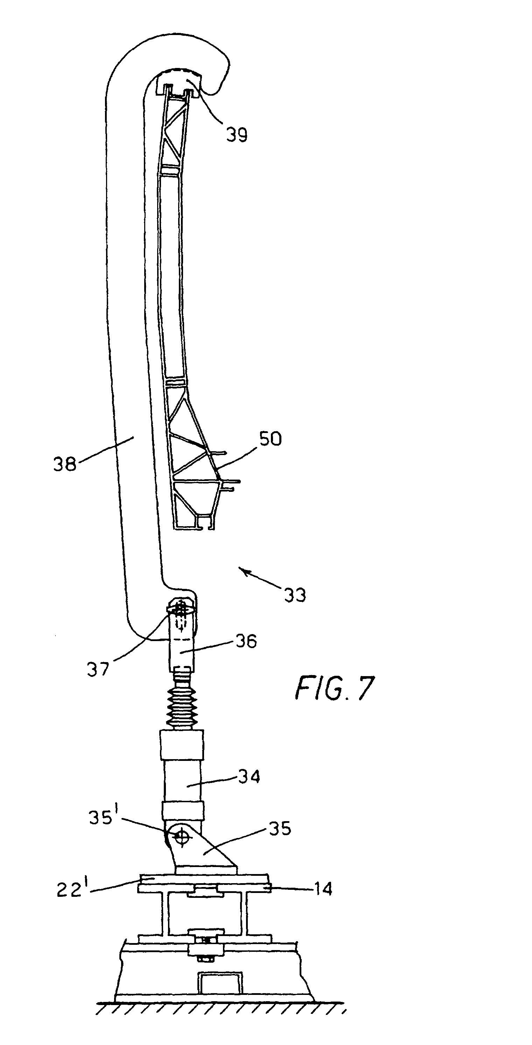

Each body side 5 is positioned in the place dictated by the design and then a plurality of clamping devices 33 are used to firmly secure the body sides 5 to the floor 3. A preferred embodiment of the clamping devices 33 is illustrated in Fig. 7 and in Fig. 4, that are a detailed view and a mounting assembly view, respectively. As shown in these Figures, each clamping device 33 substantially comprises an internally threaded body 34 to which a shoe 35 is pivotally coupled at 35', the shoe being secured to the support plate 14 by a base 22' and fastening means (not shown). A piston 36 is vertically movable within the body 34 and carries at the upper end 37 an elongated hook 38. The length of the hook 38 is such as to engage the space of one of the windows provided in each side body 5 (by resting over its lower wall 39). After the hook 38 has engaged the window edge 39, the piston 36 is moved downwards for securing the side body to the frame 9. After accomplishing this operation for all the points required in accordance with the particular application, the joining of the body side 5 to the floor 3 is completed.

At this point of the car assembling procedure, all the lower parts of the car have been properly positioned and secured to each other. It is now necessary to place over them the roof 7 that because of its size and shape, has lateral edges that are not perfectly straight. Therefore, in the first place the roof is secured to the body sides 5 in the arrangement dictated by its configuration, and then a set of tractive and compression forces is applied to it in order to adjust its geometrical shape to the car final design requirements.

For securing the roof 7 to the body sides 5 a plurality of locking devices 40 of known type are provided that engage with each other and keep the roof 7 and the sides 5 joined together.

In the illustrated embodiment, each blocking device 40 is mounted at the end of a bar 41 that in turn is slidably coupled (through rolling members 42) to a corresponding one of a plurality of position-adjusting devices 44 provided by the apparatus of the present invention. Also such adjusting devices 44 are carried by the supporting frame 9 and can be displaced in an adjustable manner along three directions that are orthogonal to each other. More precisely such directions are the car lengthwise direction, the car height direction and a direction trasverse to the car lengthwise direction.

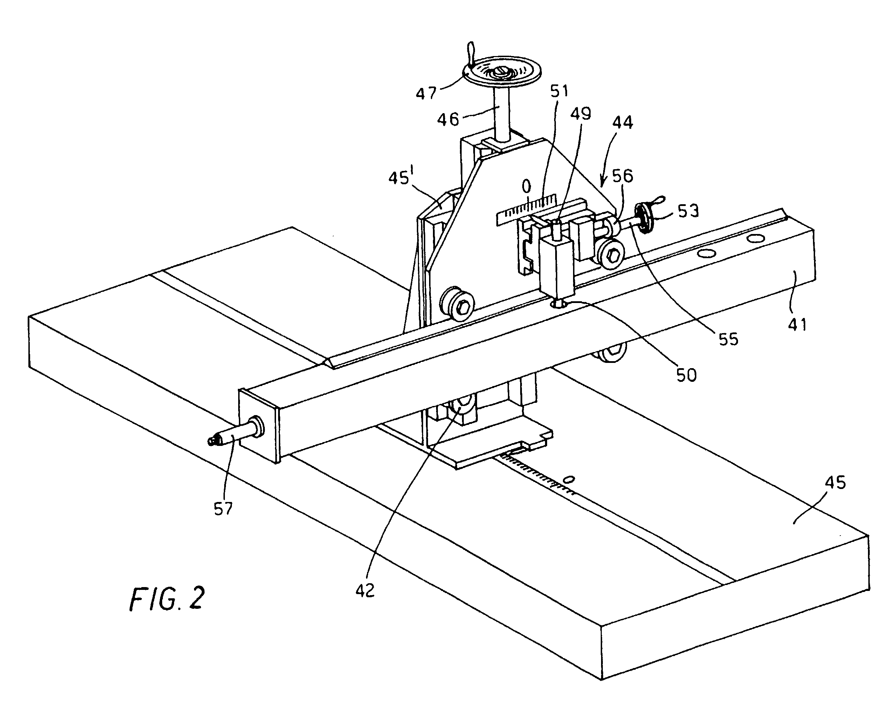

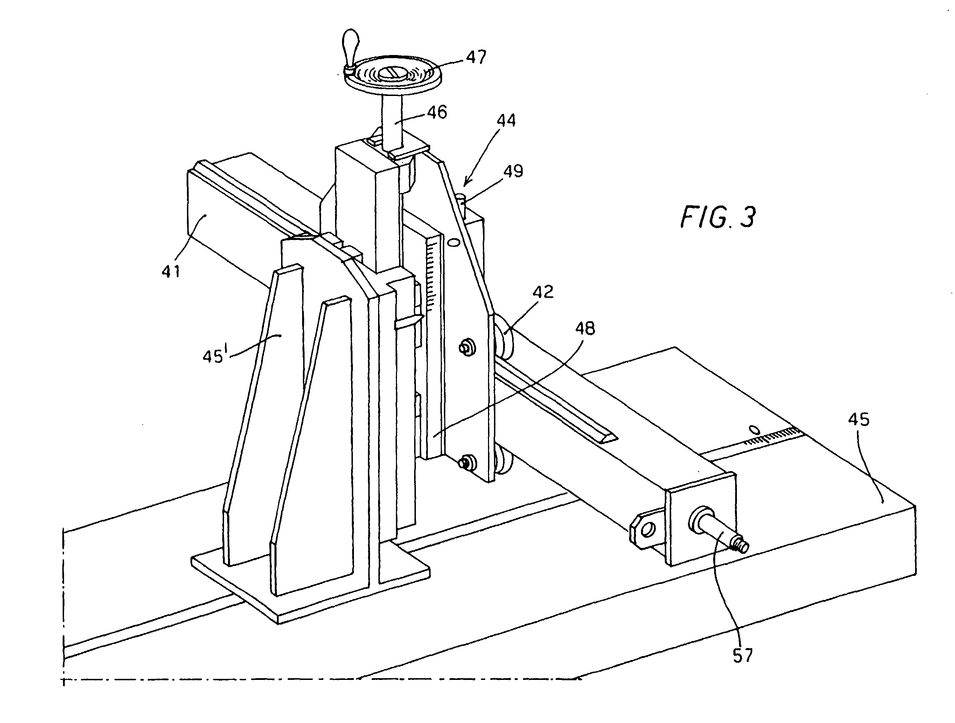

As better illustrated in Figures 2 and 3, the adjusting device 44 is slidably mounted on a supporting member 45 along the car longitudinal direction. A graduated scale starting from a "0" design position is applied to the member 45, in accordance with the car to be built. After moving the adjusting device 44 until it reaches the longitudinal position at which the body side 5 and the roof 7 are to be joined to each other, the adjusting device 44 is blocked on the supporting member 45, through conventional blocking means (not shown) acting on its base body 45' provided with ribs.

An adjustment is then carried out along the car height direction (i.e. along the vertical direction) by raising or lowering the adjusting device 44 through a square pitch screw 46 by acting on a displacement member 47 (e.g. a common handwheel). In this case, because of the screw shape, no blocking means are required after the desired height has been reached. The vertical displacement with respect to the "0" design position can be checked by means of a graduated scale 48 provided on the adjusting device 44.

Finally the positioning of the adjusting device along the car transverse direction - that is the most sensitive - is accomplished by fixing the "0" design position by inserting a conventional pin 49 (or similar means) into a hole 50 drilled to this aim in the bar 41. The "0" position is clearly shown to the operator by the graduated scale 51 provided on the adjusting device 44. At this point, after the required positions have been fixed in the longitudinal and height directions, and after the "0" point along the transverse direction has been fixed, the body sides 5 and the roof 7 are brought near and firmly joined to each other. The required displacements are accomplished by operating - through a conventional displacement member 53 such as a handwheel - a screw 55 that causes the whole bar 41 to be moved over wheels 56 along a transverse direction as a function of the wavings of the roof 7 with respect to a longitudinal straight line.

After firmly clamping together the body sides 5 and the roof 7 at all the required points, the operator actuates again the displacement member 53 to return the index to the "0" transverse position: this way the floor-sides-roof assembly is subjected to a tractive or laterally pushing force adapted to straighten all the manufacture "twists" caused by the connection of the parts being joined together.

The adjusting device 44 is further provided with a rotatable shaft 57, driven by a handwheel, allowing for an additional positioning displacement of the blocking device 40 along the car transverse axis.

At the end of all these operations, the car parts are properly positioned and aligned in respect of each other in accordance with the design instructions. Then the parts that have been so assembled and clamped together can be easily and quickly welded together.

To this aim the apparatus of the present invention is provided with at least a pair of welding devices 58 (of which two different embodiments are shown, respectively in Fig. 1 and in Fig. 4), that are slidably connected to the supporting frame 9 and supported by this latter. The welding devices 58 are adapted to weld the floor 3 to the plurality of body sides 5 and the plurality of body sides 5 to the roof 7, either simultaneously (i.e. by using plural welding devices 58), or separately. Moreover the welding devices 58 are capable of carrying out CO₂ weldings, or spot weldings or any other type of proper welding.

As better shown in Fig. 4, there is illustrated a welding device 58 for carrying out a spot welding, and such a device raises the problem of transverse outwards forces during the welding operations. These forces are to eliminated in order to prevent working problems. To this aim, the welding device 58 comprises a spot welding lower electrode 60 connected to a supporting arm 62 having the shape of an upturned "S". The upper end 63 of arm 62 is slidably coupled to a side of the frame 9 and the lower end 64 is slidably movable in a rail 66 provided to this aim in the bed plate 13. By securing the supporting arm 62 at two places, it is possible to discharge onto the frame 9 all the outer transverse forces generated during the spot welding.

For welding the roof 7 to the body sides 5 there is provided (as shown in Fig. 1) an upper part 67 of the welding device 58, that is slidably coupled to the frame 9 through a group 68 and provided with a corresponding welding torch 69.

As already noted, for completing the assembling of a railway or subway car, inner welding devices can also be used.

## Claims

1. A apparatus for properly positioning in respect of each other component parts of a car to be welded together to form a railway or subway car, said car substantially comprising a floor (3), a plurality of body sides (5) and a roof (7), said apparatus being **characterized in that** it comprises:
- a supporting frame (9);
- a plurality of devices (20) for leveling said car floor (3), said leveling devices (20) being permanently mounted on both sides of said supporting frame (9), each of said leveling devices (20) being adapted to adjustably and separately raise a portion of said floor (3) by an amount different from that of the other leveling devices (20) so as to bend said floor (3) according to a predetermined camber;
- a plurality of anchoring devices (26) permanently mounted on both sides of said supporting frame (9) for anchoring said car floor (3) to said supporting frame (9), each of said anchoring devices (26) cooperating with an adjacent one of said leveling devices (20) in order to anchor said floor (3) to said supporting frame (9) for further processing after said predetermined camber has been formed;
- a plurality of clamping devices (33) for clamping said floor (3) to said plurality of body sides (5);
- a plurality of adjusting devices (44), said adjusting devices (44) being carried by said supporting frame (9), each of said adjusting devices (44) being adjustably movable along three directions orthogonal to each other; and
- a plurality of devices (40) for blocking said plurality of body sides (5) to said roof (7), each of said blocking devices (40) being connected to one corresponding of said adjusting devices (44).

2. An apparatus as claimed in claim 1, **characterised in that** it comprises at least a pair of welding devices (58), said welding devices (58) being slidably connected to and supported by said supporting frame (9), said welding devices (58) being adapted to weld said floor (3) to said plurality of body sides (5), and said plurality of body sides (5) to said roof (7).

3. An apparatus as claimed in claims 1 or 2 , **characterized in that** said supporting frame (9) comprises a double bridge (11) extending along the whole body side of said cars.

4. An apparatus as claimed in claim 2, **characterized in that** it further comprises an inner welding device, said inner welding device being supported by said supporting frame (9) and being adapted to enter inside said car through openings formed in said roof (7) for welding inner parts of said car.

5. An apparatus as claimed in any of the preceding claims 3 or 4, **characterized in that** said supporting frame (9) further comprises an elongated upper supporting member connected to the upper ends of each of said bridges (11) extending along the whole body side of the car.

6. An apparatus as claimed in any of the preceding claims, **characterized in that** said adjusting device (44) is movable along the longitudinal direction of said car, along the height direction and along a transverse direction of said car.

7. An apparatus as claimed in claim 6, **characterized in that** said adjusting device (44) comprises an adjustment member (53, 55, 56) movable along a transverse direction to said car and a transverse bar (41), said transverse bar (41) being provided with a plurality of adjustment holes (50) into which a fixing pin (49) integrally connected with said adjustment member (53, 55, 56) is inserted, the cooperation between said adjustment member (53, 55, 56) and said transverse bar (41) providing the geometrical reference point for mutually positioning said plurality of body sides (5) and said roof (7).

8. An apparatus as claimed in any of the preceding claims 2, 3, 6 or 7, **characterized in that** said welding devices (58) can simultaneously weld both said floor (3) to said plurality of body sides (5) and said plurality of body sides (5) to said roof (7).

9. An apparatus as claimed in claim 4 or 8, **characterized in that** said welding devices (58) are spot welding devices.

10. An apparatus as claimed in claim 4 or 8, **characterized in that** said welding devices (58) are CO₂ welding devices.

11. A method for properly positioning in respect of each other component parts of a car to be welded together to form a railway or subway car, said car substantially comprising a floor (3), a plurality of body sides (5) and a roof (7), said method being **characterised in** comprising the steps of:
- arranging a supporting frame (9);
- mounting a plurality of leveling devices (20) on both sides of said supporting frame (9) for leveling said car floor (3);
- adapting said leveling devices (20) to adjustably and separately raise a portion of said floor (3) by an amount different from that of the other leveling devices (20) so as to bend said floor (3) according to a predetermined camber;
- mounting a plurality of anchoring devices (26) on both sides of said supporting frame (9) and arranging each of said anchoring devices (26) to cooperate with an adjacent one of said leveling devices (20) in order to anchor said floor (3) to said supporting frame (9) for further processing;
- clamping said floor (3) to said plurality of body sides (5) by means of a plurality of clamping devices (33);
- mounting a plurality of adjusting devices (44) carried by said supporting frame (9) and adjustably movable along three directions orthogonal to each other;
- positioning said plurality of body sides (5) with respect to said roof (7) by means of said adjusting devices (44);
- connecting said adjusting devices (44) to corresponding blocking devices (40) and blocking said plurality of body sides (5) to said roof (7) by means of said blocking devices (40).

12. A method as claimed in claim 11, further comprising the steps of:
- mounting at least a pair of welding devices (58) slidably connected to and supported by said supporting frame (9);
- adapting said welding devices (58) to weld said floor (3) to said plurality of body sides (5), and said plurality of body sides (5) to said roof (7).

## Patentansprüche

1. Vorrichtung zum korrekten Ausrichten in Bezug aufeinander von Bauteilen eines Wagens, welche zusammenzuschweißen sind, um einen Eisenbahn- oder Untergrundbahnwagen zu bilden, wobei der Wagen im Wesentlichen einen Boden (3), eine Mehrzahl von Körperseiten (5) und ein Dach (7) umfasst und die Vorrichtung **dadurch gekennzeichnet ist, dass** sie umfasst:
ein Traggerüst (9);
eine Mehrzahl von Geräten (20) zum Nivellieren des Wagenbodens (3), wobei die Nivelliergeräte (20) auf beiden Seiten des Traggerüsts (9) dauerhaft angebracht sind und jedes der Nivelliergeräte (20) angepasst ist, um einen Abschnitt des Bodens (3) um ein Maß, das sich von dem der anderen Nivelliergeräte (20) unterscheidet, auf einstellbare und getrennte Weise zu heben, um den Boden (3) gemäß einer vorgegebenen Wölbung zu biegen;
eine Mehrzahl von Verankerungsgeräten (26), welche auf beiden Seiten des Traggerüsts (9) dauerhaft angebracht sind, zum Verankern des Wagenbodens (3) am Traggerüst (9), wobei jedes der Verankerungsgeräte (26) mit einem benachbarten der Nivelliergeräte (20) zusammenwirkt, um den Boden (3) zur weiteren Bearbeitung am Traggerüst (9) zu verankern, nachdem die vorgegebene Wölbung ausgebildet ist;
eine Mehrzahl von Klemmgeräten (33) zum Klemmen des Bodens (3) an die Mehrzahl von Körperseiten (5);
eine Mehrzahl von Einstellgeräten (44), wobei die Einstellgeräte (44) durch das Traggerüst (9) getragen werden und jedes der Einstellgeräte (44) entlang dreier Richtungen, welche rechtwinkelig zueinander sind, einstellbar beweglich ist; und
eine Mehrzahl von Geräten (40) zum Feststellen der Mehrzahl von Körperseiten (5) am Dach (7), wobei jedes der Feststellgeräte (40) mit einem entsprechenden der Einstellgeräte (44) verbunden ist.

2. Vorrichtung nach Anspruch 1, **dadurch gekennzeichnet, dass** sie wenigstens ein Paar von Schweißgeräten (58) umfasst, wobei die Schweißgeräte (58) verschiebbar verbunden sind mit dem und getragen werden durch das Traggerüst (9) und die Schweißgeräte (58) angepasst sind, um den Boden (3) an die Mehrzahl von Körperseiten (5) und die Mehrzahl von Körperseiten (5) an das Dach (7) zu schweißen.

3. Vorrichtung nach Anspruch 1 oder 2, **dadurch gekennzeichnet, dass** das Traggerüst (9) eine Doppelbrücke (11) umfasst, welche sich entlang der ganzen Körperseite der Wagen erstreckt.

4. Vorrichtung nach Anspruch 2, **dadurch gekennzeichnet, dass** sie des Weiteren ein inneres Schweißgerät umfasst, wobei das innere Schweißgerät durch das Traggerüst (9) getragen wird und angepasst ist, um durch Öffnungen, welche in dem Dach (7) ausgebildet sind, zum Schweißen von inneren Teilen des Wagens in den Wagen einzutreten.

5. Vorrichtung nach einem der vorhergehenden Ansprüche 3 oder 4, **dadurch gekennzeichnet, dass** das Traggerüst (9) des Weiteren ein längliches oberes Tragelement umfasst, welches mit den oberen Enden jeder der Brücken (11), welche sich entlang der ganzen Körperseite des Wagens erstrecken, verbunden ist.

6. Vorrichtung nach einem der vorhergehenden Ansprüche, **dadurch gekennzeichnet, dass** das Einstellgerät (44) entlang der Längsrichtung des Wagens, entlang der Höhenrichtung und entlang einer Querrichtung des Wagens beweglich ist.

7. Vorrichtung nach Anspruch 6, **dadurch gekennzeichnet, dass** das Einstellgerät (44) ein Einstellelement (53, 55, 56), welches entlang einer Querrichtung zum Wagen beweglich ist, und eine Querstange (41) umfasst, wobei die Querstange (41) mit einer Mehrzahl von Einstelllöchern (50) versehen ist, in welche ein Befestigungsstift (49), welcher mit dem Einstellelement (53, 55, 56) einstückig verbunden ist, eingefügt ist, wobei die Zusammenwirkung zwischen dem Einstellelement (53, 55, 56) und der Querstange (41) den geometrischen Bezugspunkt zum gegenseitigen Ausrichten der Mehrzahl von Körperseiten (5) und des Dachs (7) bereitstellt.

8. Vorrichtung nach einem der vorhergehenden Ansprüche 2, 3, 6 oder 7, **dadurch gekennzeichnet, dass** die Schweißgeräte (58) gleichzeitig den Boden (3) an die Mehrzahl von Körperseiten (5) und die Mehrzahl von Körperseiten (5) an das Dach (7) schweißen können.

9. Vorrichtung nach Anspruch 4 oder 8, **dadurch gekennzeichnet, dass** die Schweißgeräte (58) Punktschweißgeräte sind.

10. Vorrichtung nach Anspruch 4 oder 8, **dadurch gekennzeichnet, dass** die Schweißgeräte (58) CO₂-Schweißgeräte sind.

11. Verfahren zum korrekten Ausrichten in Bezug aufeinander von Bauteilen eines Wagens, welche zusammenzuschweißen sind, um einen Eisenbahn- oder Untergrundbahnwagen zu bilden, wobei der Wagen im Wesentlichen einen Boden (3), eine Mehrzahl von Körperseiten (5) und ein Dach (7) umfasst und das Verfahren **dadurch gekennzeichnet ist, dass** es die folgenden Schritte umfasst:
Anordnen eines Traggerüsts (9);
Anbringen einer Mehrzahl von Nivelliergeräten (20) auf beiden Seiten des Traggerüsts (9) zum Nivellieren des Wagenbodens (3);
Anpassen der Nivelliergeräte (20), um einen Abschnitt des Bodens (3) um ein Maß, das sich von dem der anderen Nivelliergeräte (20) unterscheidet, auf einstellbare und getrennte Weise zu heben, um den Boden (3) gemäß einer vorgegebenen Wölbung zu biegen;
Anbringen einer Mehrzahl von Verankerungsgeräten (26) auf beiden Seiten des Traggerüsts (9) und Anordnen jedes der Verankerungsgeräte (26), um mit einem benachbarten der Nivelliergeräte (20) zusammenzuwirken, um den Boden (3) zur weiteren Bearbeitung am Traggerüst (9) zu verankern;
Klemmen des Bodens (3) mittels einer Mehrzahl von Klemmgeräten (33) an die Mehrzahl von Körperseiten (5);
Anbringen einer Mehrzahl von Einstellgeräten (44), welche durch das Traggerüst (9) getragen werden und entlang dreier Richtungen, welche rechtwinkelig zueinander sind, einstellbar beweglich sind;
Ausrichten der Mehrzahl von Körperseiten (5) in Bezug auf das Dach (7) mittels der Einstellgeräte (44);
Verbinden der Einstellgeräte (44) mit entsprechenden Feststeilgeräten (40) und Feststellen der Mehrzahl von Körperseiten (5) am Dach (7) mittels der Feststellgeräte (40).

12. Verfahren nach Anspruch 11, welches des Weiteren die folgenden Schritte umfasst:
Anbringen wenigstens eines Paares von Schweißgeräten (58), welche verschiebbar verbunden sind mit dem und getragen werden durch das Traggerüst (9);
Anpassen der Schweißgeräte (58), um den Boden (3) an die Mehrzahl von Körperseiten (5) und die Mehrzahl von Körperseiten (5) an das Dach (7) zu schweißen.

## Revendications

1. Dispositif pour positionner correctement, par rapport à chaque autre composant, des parties d'un wagon soudés ensemble pour former une wagon de chemin de fer ou de métro, ledit wagon comprenant essentiellement un plancher (3), une pluralité de côtés de caisse (5) et un toit (7), le dispositif étant **caractérisé en ce qu'**il comprend :
- un cadre support (9) ;
- une pluralité de dispositifs (20) pour mettre à niveau ledit plancher de wagon (3), lesdits dispositifs de mise à niveau (20) étant montés de façon permanente sur les deux côtés dudit cadre support (9), chacun desdits dispositifs de mise à niveau (20) étant adapté pour lever de façon ajustable et séparer une partie dudit plancher (3) d'une distance différente de celle des autres dispositifs de mise à niveau (20), pour fléchir ledit plancher (3) selon un cambrage prédéterminé ;
- une pluralité de dispositifs d'ancrage (26) montés de façon permanente sur les deux côtés dudit cadre support (9) pour ancrer ledit plancher de wagon (3) sur ledit cadre support (9), chacun desdits dispositifs d'ancrage (26) coopérant avec un dispositif de mise à niveau adjacent parmi lesdits dispositifs de mise à niveau (20), pour ancrer ledit plancher (3) audit cadre support (9) pour la suite du traitement, après avoir formé ledit cambrage prédéterminé ;
- une pluralité de dispositifs de serrage (33) pour serrer ledit plancher (3) à ladite pluralité des côtés de caisse (5) ;
- une pluralité de dispositifs d'ajustement (44), lesdits dispositifs d'ajustement (44) étant portés par ledit cadre support (9), chacun desdits dispositifs d'ajustement (44) étant déplaçable de façon ajustable selon trois directions perpendiculaires entre elles ; et
- une pluralité de dispositifs (40) pour bloquer ladite pluralité des côtés de caisse (5) sur ledit toit (7), chacun desdits dispositifs de blocage (40) étant connecté à un dispositif d'ajustement (44) parmi lesdits dispositifs d'ajustement.

2. Un dispositif selon la revendication 1, **caractérisé en ce qu'**il comprend au moins une paire de dispositifs de soudage (58), lesdits dispositifs de soudage (58) étant reliés de façon coulissante à et étant supportés par ledit cadre support (9), lesdits dispositifs de soudage (58) étant adaptés pour souder ledit plancher (3) sur ladite pluralité de côtés de caisse (5), et ladite pluralité de côtés de caisse (5) audit toit (7).

3. Un dispositif selon la revendication 1 ou 2, **caractérisé en ce que** ledit cadre support (9) comprend un double pont (11) s'étendant sur la totalité du corps de caisse desdits wagons.

4. Un dispositif selon la revendication 2, **caractérisé en ce qu'**il comprend en outre un dispositif de soudage intérieur, ledit dispositif de soudage intérieur étant supporté par ledit cadre support (9) et étant adapté pour pénétrer à l'intérieur desdits wagons par des ouvertures ménagées dans ledit toit (7), pour souder des parties intérieures dudit wagon.

5. Un dispositif selon l'une quelconque des revendications 3 ou 4 précédentes, caractérisé en que ledit cadre support (9) comprend en outre un organe support supérieur allongé, connecté aux extrémités supérieures de chacun desdits ponts (11) s'étendant sur la totalité du côté de caisse du wagon.

6. Un dispositif selon l'une quelconque des revendications précédentes, **caractérisé en ce que** ledit dispositif d'ajustement (44) est déplaçable dans la direction longitudinale dudit wagon, dans la direction de la hauteur et sur une direction transversale dudit wagon.

7. Un dispositif selon la revendication 6, **caractérisé en ce que** ledit dispositif ajustable (44) comprend un organe d'ajustement (53, 55, 56), déplaçable sur une direction transversale, vers ledit wagon et une barre transversale (41), ladite barre (41) transversale étant munie d'une pluralité de trous d'ajustement (50), dans lesquels une tige de fixation (49), reliée d'un tout audit organe d'ajustement (53, 55, 56), est insérée, la coopération entre ledit organe d'ajustement (53, 55, 56) et ladite barre transversale(41) assurant le point de référence géométrique pour le positionnement mutuel de ladite pluralité des côtés de caisse (5) et dudit toit (7).

8. Un dispositif selon l'une quelconque des revendications 2, 3, 6 ou 7 précédentes, **caractérisé en ce que** lesdits dispositifs de soudage (58) peuvent simultanément souder à la fois ledit toit (3) sur ladite pluralité de côtés de caisse (5) et ladite pluralité de côtés de caisse (5) sur ledit toit (7).

9. Un dispositif selon la revendication 4 ou 8, **caractérisé en ce que** lesdits dispositifs de soudage (58) sont des dispositifs de soudage par points.

10. Un dispositif selon la revendication 4 ou 8, **caractérisé en ce que** lesdits dispositifs de soudage (58) sont des dispositifs de soudage à CO₂.

11. Un procédé de positionnement correct par rapport à chaque autre partie composante d'une wagon, à souder ensemble pour former une wagon de chemin de fer ou de métro, ledit wagon comprenant essentiellement un plancher (3), une pluralité de côtés de caisse (5) et un toit (7), ledit procédé étant **caractérisé par** le fait de comprendre des étapes consistant à :
- agencer un châssis support (9) ;
- monter une pluralité de dispositifs de mise à niveau (20) sur les deux côtés dudit châssis de support (9) pour mettre à niveau ledit plancher de wagon (3) ;
- adapter lesdits dispositifs de mise à niveau (20) pour lever de façon ajustable et séparée une partie dudit plancher (3) d'une distance différente de celle des autres dispositif de mise à niveau (20) pour fléchir ledit plancher (3) selon un cambrage prédéterminé ;
- monter une pluralité de dispositifs d'ancrage (26) sur les deux côtés dudit cadre de support (9) et agencer chacun desdits dispositifs d'ancrage (26) pour coopérer avec un dispositif de mise à niveau (20) adjacent parmi lesdits dispositifs de mise à niveau, pour ancrer ledit plancher (3) sur ledit châssis support (9) pour la suite du traitement ;
- serrer ledit plancher (3) à ladite pluralité de côtés de caisse (5), en utilisant une pluralité de dispositifs de serrage (33) ;
- monter une pluralité de dispositifs d'ajustement (44) portés par ledit cadre support (9) et déplaçable de façon ajustable le long de trois directions perpendiculaires à chaque autre ;
- positionner ladite pluralité de côtés de caisse (5) par rapport audit toit (7), en utilisant lesdits dispositifs d'ajustement (44) ;
- connecter lesdits dispositifs d'ajustement (44) sur des dispositifs de blocage (40) correspondants et bloquer ladite pluralité de côtés de caisse (5) sur ledit toit (7), en utilisant lesdits dispositifs de blocage (40).

12. Un procédé selon la revendication 11 comprenant en outre les étapes consistant à :
- monter au moins une paire de dispositifs de soudage (58) reliés à coulissement à et supportés par ledit châssis support (9) ;
- adapter lesdits dispositifs de soudage (58) pour souder ledit plancher (3) sur ladite pluralité de côtés de caisse (5) et ladite pluralité de côtés de caisse (5) audit toit (7).
